# FASCICULE DE BREVET EUROPEEN

(11) **EP 4 046 252 B1**
(45) Date de publication et mention de la délivrance du brevet: **09.09.2026**
(21) Numéro de dépôt: 20789612.7
(22) Date de dépôt: 14.10.2020
(51) Int. Cl.: H02G 1/12

(54) **DISPOSITIF POUR SÉPARER L'ÂME ET LA GAINE D'UN CÂBLE ET PROCÉDÉ DE SÉPARATION DE L'ÂME ET LA GAINE D'UN CÂBLE**
VORRICHTUNG ZUM TRENNEN DER LEITUNG UND DES MANTELS VON EINEM KABEL UND VERFAHREN ZUM TRENNEN DER LEITUNG UND DES MANTELS VON EINEM KABEL
DEVICE FOR SEPARATING THE CORE AND SHEATH FROM A CABLE AND METHOD FOR SEPARATING THE CORE AND SHEATH FROM A CABLE

(30) Priorité: 14.10.2019 FR 1911428
(43) Date de publication de la demande: 24.08.2022
(73) Titulaire: Inovertis, 26290 Donzère (FR); Agence Nationale pour la Gestion des Déchets Radioactifs, 92298 Châtenay-Malabry (FR); MTB Manufacturing, 38890 Saint-Chef (FR); Commissariat à l'Energie Atomique et aux Energies Alternatives, 75015 Paris (FR)
(72) Inventeur: BOSIA, Benjamin, 38890 Montcarra (FR); MARGUERITTE, Laurent, 26200 Montélimar (FR); ROOS, Rémi, 26270 Saulce Sur Rhône (FR)
(74) Mandataire: Talbot, Alexandre
(86) Numéro de dépôt international: PCT/EP2020/078820
(87) Numéro de publication internationale: WO 2021/074175

(56) Documents cités:
- CN-A- 106 602 478
- ES-U- 1 060 073
- FR-A1- 2 728 735
- GB-A- 460 683
- US-A- 4 809 566

## Description

### Domaine technique

L'invention concerne les dispositifs pour séparer l'âme et la gaine d'un câble et qui comportent :
- un appareil configuré pour fournir le câble selon un axe de fourniture parallèle à l'axe longitudinal du câble jusqu'à une sortie en passant entre au moins deux couteaux,
- les au moins deux couteaux étant configurés pour découper la gaine sur toute son épaisseur et former au moins deux portions de gaine mécaniquement dissociées l'une de l'autre,
- au moins deux rampes configurées pour maintenir la séparation entre les au moins deux portions de gaine et séparer mécaniquement la gaine et l'âme jusqu'à la sortie en modifiant différemment la trajectoire de déplacement des au moins deux portions de gaine par rapport à l'axe de fourniture.

L'invention concerne également les procédés de séparation de l'âme et la gaine d'un câble.

### Technique antérieure

Dans de nombreuses activités, il est intéressant de pouvoir recycler les câbles et notamment les câbles électriques après usage. Le recyclage passe par la séparation de la gaine et de l'âme du câble. Cependant, pour valoriser au mieux l'âme du câble, il est important que l'âme soit exempte de toute pollution. En utilisation, l'âme est protégée par la gaine qui reçoit et emmagasine la pollution. Il convient de ne pas transférer cette pollution lors de la séparation de l'âme et de la gaine. Le document CN107482541 propose une méthode de nettoyage des câbles électriques pollués avant de réaliser une coupe longitudinale. Le nettoyage est réalisé par frottage entre deux tampons. Après l'étape de nettoyage, une seule rainure est formée le long de la gaine au moyen d'un couteau suivi d'un écarteur. L'écarteur appuie ponctuellement sur la rainure pour détacher la gaine et l'âme. La gaine et l'âme sont enroulées l'un au-dessus de l'autre de sorte que si la gaine n'a pas été correctement nettoyées ou se délite, sa pollution est transférée à l'âme. Par ailleurs, cette configuration nécessite un amorçage manuel afin de séparer l'âme et la gaine.

Cette problématique est particulièrement présente dans l'industrie nucléaire où le câble électrique est considéré, dans son intégralité, comme un déchet nucléaire alors que l'âme n'a jamais été mise en contact avec un quelconque matériau contaminant. Il ressort qu'un procédé tel qu'il est présenté dans le document CN107482541 n'est pas compatible avec une telle problématique et ne fournit pas de bons résultats.

Il existe alors un intérêt à valoriser l'âme du câble électrique en la séparant de la gaine et en prenant soin d'éviter, à tous les stades du traitement et plus particulièrement lors de la séparation, de déplacer la contamination/pollution se trouvant éventuellement sur la face externe de la gaine vers l'âme.

Une autre solution est proposée dans le document FR2728735 qui prévoit de dégainer un câble pollué en surface par des substances radioactives. La gaine du câble est partiellement découpée au moyen d'un faisceau laser. Cette configuration permet de séparer physiquement les moyens de découpe et la gaine pour éviter de polluer la source laser avec des substances radioactives. Il s'avère que cette solution n'est pas satisfaisante. Le risque de déplacement de la contamination radioactive vers l'âme est toujours présent. Par ailleurs, cela nécessite de régler très précisément l'énergie du faisceau laser en fonction de la vitesse de défilement du câble et de la composition de la gaine. De plus, la gaine est chauffée pour favoriser son ouverture au moyen d'un écarter tronconique ce qui complique l'opération de rainurage de la gaine.

Il existe donc un besoin pour fournir un dispositif capable de séparer l'âme et la gaine d'un câble tout en assurant qu'une éventuelle contamination présente à la surface extérieure de la gaine ne soit pas déplacée vers l'âme du câble.

Le document CN 106602478 divulgue un dispositif configuré pour découper la gaine d'un câble au moyen de deux couteaux montés diamétralement opposés autour du câble. Le câble est contraint latéralement en amont des couteaux pour placer le câble par rapport aux couteaux. Le câble glisse sur une rainure de sorte que le câble reste dans la position lors de l'étape de découpe de la gaine. Suite à l'opération de découpe, le câble passe à travers un tronc de cône ouvert afin de séparer la gaine et l'âme. Cette solution n'est pas acceptable pour un câble éventuellement contaminé en surface car la poussière contaminée peut migrer depuis la gaine jusqu'à l'âme.

Le document ES 1060073U décrit un dispositif configuré pour découper la gaine d'un câble. Le câble est introduit dans un dispositif centreur adapté au diamètre du câble ce qui permet de placer le câble par rapport à trois couteaux montés radialement pour découper la gaine. Un élément de séparation est monté en aval des couteaux pour séparer la gaine et l'âme. Là encore, il ressort que cette configuration ne permet pas d'empêcher la migration d'une poussière contaminée depuis la gaine jusqu'à l'âme après la découpe.

Le document US 4809566 divulgue un dispositif de dénudage pour des fils et des câbles. Le fil est enroulé sous tension autour d'une bobine et un couteau définissant une encoche coupante est disposé en appui sur le dessus du fil pour découper la gaine en deux parties. Le couteau est installé de manière inclinée afin de déformer le fil et découper la gaine sur toute son épaisseur. Une tige est en appui sur le dessous du fil pour assurer la déformation de la partie inférieure de la gaine tandis que la partie supérieure de la gaine doit se retourner sous son propre poids en sortie du couteau.

### Objet de l'invention

Un objet de l'invention consiste à pallier ces inconvénients, et plus particulièrement à fournir un dispositif pour séparer une âme et une gaine d'un câble qui est capable de réduire le taux d'occurrence d'un contact entre la paroi externe de la gaine et l'âme et le déplacement d'une éventuelle pollution de la gaine vers l'âme.

Selon un aspect de l'invention, il est proposé un dispositif pour séparer une âme et une gaine d'un câble selon la revendication 1 et notamment un dispositif pour séparer une âme et une gaine d'un câble, comportant :
- un appareil configuré pour fournir le câble selon un axe de fourniture parallèle à l'axe longitudinal du câble jusqu'à une sortie en passant entre au moins deux couteaux,
- les au moins deux couteaux étant configurés pour découper la gaine sur toute son épaisseur et former au moins deux portions de gaine mécaniquement dissociées l'une de l'autre, chaque couteau comprenant un front de découpe s'étendant selon une première direction radiale par rapport à l'axe longitudinal du câble pour découper la gaine,
- au moins deux rampes s'étendant depuis les au moins deux couteaux, les au moins deux rampes étant configurées pour maintenir la séparation entre les au moins deux portions de gaine et séparer mécaniquement la gaine et l'âme jusqu'à la sortie en modifiant différemment la trajectoire de déplacement des au moins deux portions de gaine par rapport à l'axe de fourniture, et
- au moins deux déflecteurs agencés en aval des au moins deux rampes pour recevoir les portions de gaine, les au moins deux déflecteurs possédant une face externe modifiant la direction de déplacement des portions de gaine perpendiculairement à l'axe longitudinal de l'âme.

De manière avantageuse, les au moins deux couteaux comprennent deux couteaux ayant leur front de découpe dans un même plan, lesdits deux couteaux étant séparés d'une première distance de séparation et les rampes possèdent une face de contact destinée à recevoir la portion de gaine en sortie des couteaux, la face de contact étant orientée pour s'éloigner de l'axe longitudinal de l'âme lors d'un déplacement de la gaine de l'amont vers l'aval.

Dans une configuration particulière, chaque front de découpe possède une première extrémité qui s'étend selon l'axe de fourniture de manière adjacente à la rampe associée éventuellement jusqu'au déflecteur.

Préférentiellement, chaque couteau possède un front de découpe disposé radialement et perpendiculairement par rapport à l'axe longitudinal du câble ou un front de découpe disposé radialement et s'éloignant de l'axe longitudinal de l'âme lors d'un déplacement de la gaine de l'amont vers l'aval.

Selon un mode de réalisation, lesdits deux couteaux sont montés fixes sur deux supports, en association avec des moyens de réglage des deux supports configurés pour définir une valeur de première distance de séparation entre les deux couteaux.

Selon un autre mode de réalisation, les rampes sont montées fixes sur les couteaux associés.

Selon un développement, le dispositif pour séparer une âme et une gaine d'un câble peut ne comporter que deux couteaux agencés pour former deux portions de gaine identiques.

Avantageusement, les zones de découpe des deux couteaux appartiennent à un plan vertical.

Dans une configuration préférentielle, les déflecteurs sont montés en appuis sur les couteaux pour définir un trou traversant délimité par les déflecteurs et les rampes.

Dans un autre développement, les couteaux et les déflecteurs sont montés sur un anneau destiné à être traversé en son centre par l'âme, les déflecteurs déplaçant les portions de gaine vers la partie externe de l'anneau.

Dans une configuration particulière, le dispositif comporte un centreur monté entre l'appareil configuré pour délivrer le câble et les au moins deux couteaux, le centreur comportant au moins un guide monté mobile perpendiculairement par rapport à l'axe de fourniture de câble pour décaler l'axe longitudinal du câble par rapport aux au moins deux couteaux.

De manière avantageuse, l'appareil configuré pour fournir le câble applique une pression sur le câble au moyen de deux galets rotatifs, la pression étant configurée pour déformer la gaine et uniformiser la forme de la gaine.

Dans un autre développement, l'appareil possède deux galets rotatifs possédant une gorge en forme de V. L'appareil applique une pression configurée pour déformer la gaine et fournir deux premières zones de gaine diamétralement opposées ayant une épaisseur supérieure à deux deuxièmes zones de gaine diamétralement opposées, les deux premières zones de gaine étant décalées de 90° par rapport aux deux deuxièmes zones de gaine, les deux couteaux étant agencés pour découper la gaine dans les deux premières zones de gaine.

L'invention a pour objet un procédé de séparation de l'âme et de la gaine d'un câble qui peut être mis en œuvre facilement et qui réduit voir annule les transferts de polluants entre la gaine et l'âme du câble lors de la séparation.

Selon un aspect de l'invention, il est proposé un procédé de séparation de l'âme et de la gaine d'un câble selon la revendication 14.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1, illustre schématiquement une vue en coupe transversale d'un mode de réalisation d'un dispositif pour séparer une âme et une gaine d'un câble selon l'invention ;
- la figure 2, illustre schématiquement une vue de profil des couteaux associés aux bloqueurs, aux rampes et aux déflecteurs d'un dispositif pour séparer une âme et une gaine d'un câble illustré à la figure 1 ;
- la figure 3, illustre schématiquement une vue de profil d'un mode de réalisation d'un dispositif pour séparer une âme et une gaine d'un câble dans une enceinte ; et
- la figure 4, illustre schématiquement un procédé de séparation de la gaine et de l'âme selon l'invention ;
- la figure 5 illustre schématiquement un dispositif pour séparer une âme et une gaine d'un câble muni d'un dispositif de déformation du câble et d'un réservoir pour stocker la gaine du câble ;
- la figure 6 illustre schématiquement un dispositif pour séparer une âme et une gaine d'un câble muni d'un dispositif de déformation du câble sans capotage.

### Description des modes de réalisation

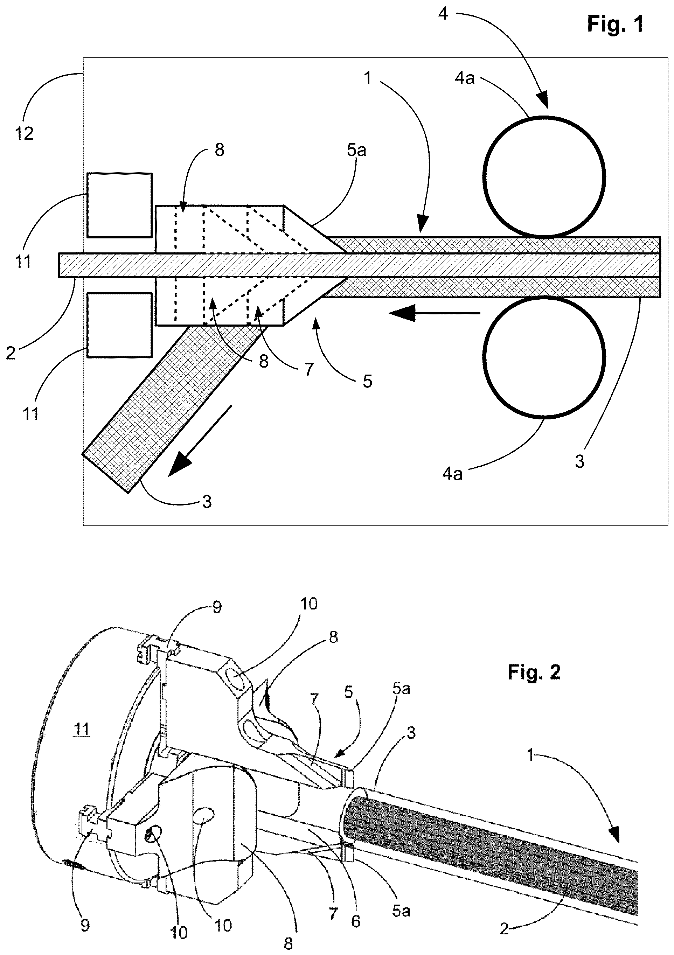

La figure 1 représente schématiquement un dispositif pour séparer une âme 2 et une gaine 3 d'un câble 1. Le câble 1 possède une âme 2 et une gaine 3 qui entoure l'âme 2. Le câble 1 présente sensiblement une section circulaire avec une âme 2 qui présente avantageusement une section circulaire ou autre. La gaine 3 se présente sous la forme d'un anneau autour de l'âme 2. Le câble 1 possède un axe longitudinal qui représente la plus grande dimension du câble 1. L'âme 2 du câble 1 peut être formée par différents fils, par exemple des fils électriques qui comportent également une âme en matériau métallique enrobée par une gaine spécifique. Le câble 1 possède un axe central qui est l'axe central de l'âme 2 et qui correspond ou est parallèle à l'axe longitudinal de l'âme 2 et donc du câble 1.

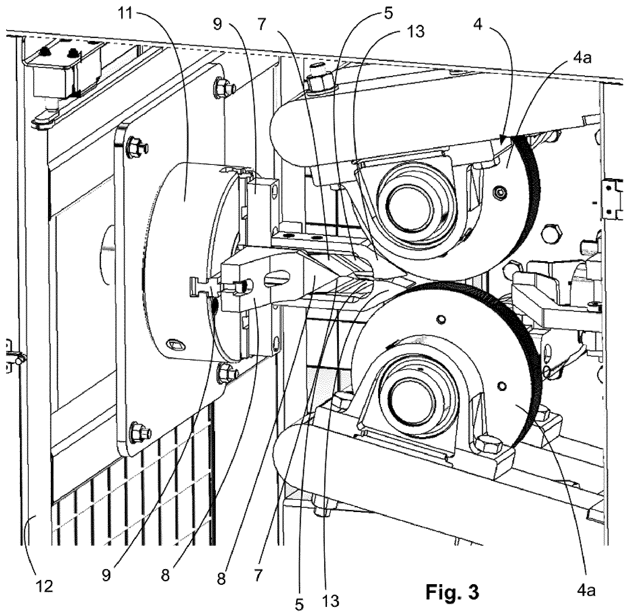

Le dispositif comprend un appareil 4 configuré pour délivrer le câble 1 selon un axe de fourniture de câble. L'axe de fourniture du câble 1 est parallèle à l'axe longitudinal du câble et correspond à l'axe central du câble 1. L'appareil 4 est configuré pour délivrer le câble 1 selon un sens de fourniture du câble 1 qui envoie le câble 1 vers une sortie du dispositif en passant à travers une zone de découpe puis à travers une zone de séparation de l'âme 2 et de la gaine 3. L'appareil 4 peut être formé par tout moyen adapté permettant de faire circuler le câble 1 en direction de la sortie. **Il** est particulièrement avantageux de prévoir que l'appareil 4 possède deux roues ou galets 4a qui sont entrainés en rotation par un moteur. La rotation des galets 4a entraine le déplacement du câble 1 vers la sortie. Dans une configuration avantageuse illustrée à la figure 3, la surface des galets 4a est structurée, par exemple avec des rainures pour favoriser l'entrainement du câble 1 par les galets 4a. Avantageusement, les galets 4a compriment le câble 1 pour faciliter son déplacement.

Le dispositif pour séparer l'âme 2 et la gaine 3 d'un câble 1 possède des moyens de découpe qui se présentent sous la forme d'au moins deux couteaux 5. Selon les configurations, le dispositif peut posséder uniquement deux couteaux 5 comme illustré sur les différentes figures, mais il peut également posséder plus de deux couteaux 5. Les couteaux 5 sont agencés en aval de l'appareil 4 (selon le sens de défilement du câble 1) pour recevoir le câble 1. Les couteaux 5 sont agencés pour découper la gaine 3 et former au moins deux portions de gaine 3 mécaniquement dissociées l'une de l'autre. Les portions de gaine 3 sont maintenues ensemble mécaniquement au moyen de la portion de gaine 3 non encore découpée.

Les couteaux 5 et l'appareil 4 sont agencés de manière à fournir le câble 1 selon l'axe de fourniture dans la zone de découpe ce qui place la gaine 3 en vis-à-vis des fronts de découpe 5a des couteaux 5 (selon la direction de fourniture) de sorte que la totalité de l'épaisseur de la gaine 3 soit découpée pour former les au moins deux portions de gaine 3.

Dans une configuration préférentielle, l'appareil 4 est configuré pour rectifier le câble 1. Il est apparu que lors de son installation et/ou lors de son retrait, le câble 1 a été déformé, abimé, écrasé, tourné ou enroulé ce qui a pour effet de modifier sa forme extérieure et cela peut également modifier l'épaisseur de la gaine 3. Le câble 1 à ouvrir ne possède plus une forme circulaire sur toute sa longueur et l'épaisseur de la gaine 3 varie selon les endroits. Il est donc particulièrement avantageux de rectifier le câble 1 afin qu'il sorte de l'appareil 4 pour définir un câble rectiligne ou sensiblement rectiligne et dont la forme est sensiblement uniforme sur la longueur à découper. Il est particulièrement avantageux d'appliquer une contrainte en compression suffisante pour déformer la gaine 3. La contrainte à appliquer est supérieure à la contrainte nécessaire pour obtenir un bon frottement entre les galets 4a et le câble 1 pour assurer l'entrainement du câble 1 tout en étant inférieure à la pression entrainant la destruction du câble 1 ou son blocage entre les galets 4a. La déformation est avantageusement une déformation plastique. Une déformation élastique peut être envisagée si la gaine est toujours déformée lorsqu'elle arrive sur les couteaux 5.

Il est avantageux d'utiliser des galets 4a définissant une gorge destinée à recevoir le câble 1 car un galet plat à tendance à déformer le câble 1 ce qui complexifie l'opération de découpe. La gorge peut avoir une forme en V, en U ou tout autre forme adaptée à la réception du câble 1. La forme de la gorge est observable selon une direction de coupe radiale.

La forme en U et plus particulièrement en demi-cercle est avantageuse pour assurer la fourniture d'un câble 1 de section circulaire mais cela impose d'avoir une forme de gorge adaptée à chaque diamètre du câble 1. L'utilisation d'une gorge en forme de V permet une meilleure adaptabilité à des câbles 1 ayant des diamètres différents. Lorsque les galets 4a ont une gorge en forme de V, il est avantageux d'appliquer une contrainte sur le câble 1 au moyen des galets 4a pour déformer la gaine 3 afin d'avoir deux premières zones de gaine 3 plus épaisses et diamétralement opposées ainsi que deux deuxièmes zones de gaine 3 moins épaisses et également diamétralement opposées. Les zones plus épaisses sont décalées de 90° par rapport aux zones moins épaisses. Cette pression appliquée sur le câble 1 peut permettre de déplacer l'âme 2 par rapport à la gaine 3. Cela réduit les risques de collage entre l'âme et la gaine et cela peut faciliter l'opération de découpe et de désolidarisation entre l'âme et la gaine. La valeur de la pression dépend des caractéristiques du câble 1. La valeur de la pression appliquée sur le câble peut être définie par tout moyen adapté et notamment en définissant l'écartement entre les deux galets 4a.

**Il** est particulièrement avantageux de réaliser la découpe de la gaine 3 au moyen de deux couteaux 5 dans la zone où l'épaisseur de gaine 3 est la plus élevée.

Chaque couteau 5 comprend un front de découpe 5a qui s'étend selon une première direction. La première direction s'étend de manière radiale par rapport à l'axe central du câble 1 pour découper la gaine 3 sur toute son épaisseur. En considérant que le câble 1 est à section circulaire, les faces de découpe 5a sont disposées selon des rayons qui s'étendent à partir de l'axe central du câble 1. De cette manière, lorsque l'appareil 4 déplace le câble 1 vers la sortie, la gaine 3 vient en contact du front de découpe. La pression appliquée par le câble 1 au moyen de l'appareil 4 entraine la découpe de la gaine 3 sur toute son épaisseur. **Il** est avantageux de ne pas former plus de cinq portions de gaine 3 pour faciliter la gestion des déplacements des portions de gaine par rapport à l'âme 2.

Dans l'art antérieur, il est proposé de découper partiellement l'épaisseur de la gaine pour former une rainure puis d'étirer la gaine pour former deux portions de gaines séparées mécaniquement entre elles et de séparer la gaine et l'âme. La rainure agit comme un réceptacle à poussière et notamment lors de son déplacement. La séparation de la gaine et de l'âme s'effectue en déchirant la gaine et lors de cette déchirure de la contamination peut migrer jusqu'à l'âme. Dans l'art antérieur, il est également proposé de découper la gaine tout en la laissant en contact de l'âme avant de réaliser la séparation par déformation de la gaine. Là encore, la contamination de la gaine peut migrer jusqu'à l'âme avant la séparation effective de l'âme et de la gaine. Au contraire, selon l'invention, les couteaux 5 coupent la gaine 3 sur toute son épaisseur pour former des portions de gaine 3 qui sont dissociées mécaniquement ce qui facilite la séparation de l'âme 2 et de la gaine 3 et donc réduit les risques de migration de la contamination.

De manière avantageuse, les au moins deux couteaux 5 possèdent deux couteaux 5 avec un front découpe 5a qui se situe dans un même plan perpendiculaire à l'axe de fourniture du câble ce qui permet de couper les différentes portions de la gaine simultanément et facilite le maintien de l'âme selon l'axe de fourniture. Il est particulièrement avantageux de prévoir que les fronts de découpe 5a des deux couteaux 5 soient contenus dans un plan vertical. Les deux portions de gaine 3 peuvent glisser par rapport à l'âme 2 à cause de leur poids. Les portions de gaine 3 se séparent naturellement de l'âme 2. Les portions de gaine ne viennent pas en appui sur le somment de l'âme 2 ce qui réduit les risques de transmission des polluants depuis les portions de gaine. Il est alors préférable d'utiliser des galets 4a agencés pour avoir les épaisseurs de gaines les plus importantes selon un plan de coupe vertical. Les galets 4a peuvent être agencés horizontalement et non verticalement comme sur la figure 3. Les axes de rotation des galets 4a sont verticaux ou sensiblement verticaux.

Dans les configurations illustrées aux figures 2 et 3, différentes formes de front de découpe 5a peuvent être employées. Différentes formes de front de découpe 5a sont possibles avec notamment un front de découpe 5a qui est inclus dans un plan perpendiculaire à l'axe de fourniture de câble 1 comme cela est illustré à la figure 2. Dans une alternative de réalisation, le front de découpe 5a est incliné par rapport à un plan perpendiculaire à l'axe de fourniture de câble 1. Ainsi, l'effort de coupe sur toute l'épaisseur de la gaine 3 est réparti sur une distance plus importante de déplacement du câble 1.

De manière avantageuse, le front de coupe s'écarte de l'axe de fourniture de câble et donc de l'âme 2 lors d'un déplacement de la gaine 3 de l'amont vers l'aval comme illustré aux figures 1 et 3. En d'autres termes, le front de coupe 5a réalise la découpe de la gaine 3 depuis la face interne vers la face externe.

Dans une alternative de réalisation, le front de coupe 5a peut être en forme de V avec une diminution de la distance séparant les deux parties opposées du front de coupe 5a augmente au fur et à mesure que le câble 1 se déplace vers la sortie. Ces configurations sont particulièrement avantageuses car le front de découpe 5a ne pousse pas la face externe de la gaine 3 contre l'âme 2 pour obtenir la découpe de la gaine 3. Le front de découpe 5a peut être plus ou moins évasé perpendiculaire à la première direction et l'axe central pour tenir compte des propriétés mécaniques de la gaine 3 et écarter les deux portions adjacentes de gaine 3.

Lorsque la face externe de la gaine 3 est souillée, par exemple avec des poussières radioactives, en poussant la face externe de la gaine 3 contre l'âme 2 pour découper la gaine 3, on augmente la probabilité de déplacer les poussières et autres impuretés vers l'âme 2. La découpe de la gaine 3 depuis l'extérieur vers l'intérieur est également plus compliquée lorsque l'âme 2 n'est pas rigide et se déforme sous l'action de la contrainte appliquée par le moyen de découpe.

Il est donc particulièrement avantageux d'avoir un front de découpe 5a perpendiculaire ou orienté depuis l'intérieur vers l'extérieur pour réduire le transfert de contamination lors d'un déplacement de l'amont vers l'aval. Le transfert de poussière est nul ou quasi-nul lorsque la découpe de la gaine 3 s'effectue depuis l'interface avec l'âme 2 en direction de la face externe de la gaine 3.

Cette solution est avantageuse à celle proposée dans l'art antérieur où un faisceau laser est configuré pour faire fondre le matériau formant la gaine. La gaine souillée est fondue ce qui emmène les poussières depuis l'extérieure vers l'intérieure en suivant le front de fusion.

Les couteaux 5 sont avantageusement agencés à équidistance de l'axe central du câble 1 à une valeur qui correspond de préférence au rayon de l'âme 2 pour découper assurément toute l'épaisseur de la gaine 3.

Il est avantageux que les fronts de découpe 5a soient disposés afin de couper la gaine 3 simultanément et préférentiellement que les fronts de découpe 5a possèdent la même forme et inclinaison par rapport à l'axe de fourniture de la gaine 3. Le document CN107482541 propose un seul front de découpe de la gaine ce qui a tendance à faire plier le câble, il est alors nécessaire d'utiliser des roues de rattrapage pour replacer le câble dans la bonne position avant la dissociation de la gaine 3 et de l'âme 2. Lorsque la gaine 3 est polluée, la pollution se dépose sur les roues qui transportent la pollution tout au long du câble et éventuellement dans la rainure formée dans la gaine jusqu'à l'âme.

Une fois les portions de gaine 3 formées, il est particulièrement avantageux que l'âme 2 mécaniquement dissociée de la gaine 3 ne se déforme pas à cause de la modification de la liaison mécanique entre l'âme 2 et la gaine 3. Il est particulièrement avantageux d'utiliser au moins deux bloqueurs 6 prolongeant les au moins deux couteaux 5 selon l'axe de fourniture de câble. Les au moins deux bloqueurs 6 sont configurés pour maintenir l'âme 2 selon l'axe de fourniture de câble. De cette manière, l'âme 2 orientée selon l'axe de fourniture au moment de la découpe reste sensiblement orientée selon le même axe ce qui facilite la prolongation de la découpe sur toute la longueur du câble. Cependant, lorsque les propriétés mécaniques de l'âme le permettent, le bloqueur 6 n'est pas nécessaire.

Il est particulièrement avantageux d'utiliser deux bloqueurs 6 qui s'étendent à partir des deux couteaux 5 selon l'axe de fourniture de câble. Dans le mode de réalisation illustré, les deux bloqueurs 6 sont diamétralement opposés par rapport à l'axe central du câble 1 lors de la découpe. Les bloqueur 6 sont séparés de l'axe central de l'âme 2 d'une distance égale ou très légèrement supérieure au rayon de l'âme 2 pour maintenir l'orientation de l'âme 2. De préférence, au moins un bloqueur 6 se trouve verticalement sous l'axe de fourniture de câble pour éviter que l'âme 2 se déforme sous son propre poids.

Pour séparer l'âme 2 et les au moins deux portions de gaine 3, on utilise au moins deux rampes 7. Les rampes 7 évitent que les portions de la gaine 3 se rejoignent et que la gaine 3 retrouve sensiblement sa forme initiale, c'est-à-dire sa forme avant l'étape de découpe à cause d'un effet mémoire de la gaine 3. Les rampes 7 sont configurées pour modifier les directions de déplacement des portions de gaine 3 et ainsi ne plus suivre un déplacement parallèle à l'axe central de l'âme 2. Les portions de gaine 3 se dissocient mécaniquement de l'âme 2 qui maintient son déplacement selon l'axe de fourniture.

Chaque front de découpe 5a est prolongé par au moins une rampe 7 s'étendant depuis chaque couteau 5 selon une deuxième direction perpendiculaire à la première direction et à l'axe de fourniture du câble 1. Chaque rampe 7 est configurée pour avoir une face externe s'éloignant de l'axe de fourniture du câble 1 et donc de l'âme 2 selon la première direction lors d'un déplacement selon le sens de fourniture du câble 1. Chaque rampe 7 est avantageusement configurée pour que la distance entre les deux faces externes des deux rampes opposées soit supérieure au diamètre de l'âme 2.

Par exemple, l'extrémité amont de la rampe 7 est disposée dans le prolongement de la partie interne du front de coupe 5a, c'est-à-dire la plus près de l'âme 2 de sorte que la portion de gaine 3 en sortie du couteau 5 prenne appui sur la rampe 7 et s'éloigne de l'âme 2 au fur et à mesure de son déplacement vers la sortie. Cependant, il est également possible que la rampe 7 s'étende selon plusieurs directions afin de définir un séparateur entre l'âme 2 et la gaine 3.

La rampe 7 est placée à proximité immédiate de la zone de coupe 5a de manière que lors du déplacement des portions de la gaine 3, la direction de déplacement de l'âme 2 soit en partie liée par la direction de déplacement imposée par le câble 1 complet, c'est-à-dire l'association de la gaine 3 et de l'âme 2. De cette manière, au fur et à mesure que le câble 1 avance en direction de la sortie, la portion de gaine 3 s'éloigne de l'âme 2 au moins jusqu'à une distance seuil.

En d'autres termes, les portions de gaine 3 qui ont été libérées mécaniquement de l'âme 2 viennent en contact des rampes 7 qui s'étendent depuis les couteaux 5. L'orientation des rampes 7 pousse la portion de gaine 3 à s'éloigner de l'âme 2 lorsque l'appareil 4 pousse le câble 1 vers la sortie.

De manière avantageuse, la rampe 7 est montée fixe sur le couteau 5 associé ce qui facilite son placement par rapport à la face de découpe. Ainsi, une fois le front de découpe 5a placé par rapport à l'axe central de l'âme 2 et par rapport à la face interne de la gaine 3, la partie amont de la rampe 7 est automatiquement placée par rapport à la portion de gaine 3 qui sera formée.

Il est avantageux de prévoir que le front amont de la rampe 7, c'est-à-dire la première partie qui vient en contact de l'âme 2 et/ou de la gaine 3 soit disposée à la même distance de l'axe central que l'extrémité inférieure du couteau 5, c'est-à-dire l'extrémité la plus proche de l'âme 2.

Il est également avantageux de prévoir que le couteau 5, le bloqueur 6 et la rampe 7 soient formés par un élément monobloc ou monolithique.

Dans un mode de réalisation avantageux, deux rampes 7 sont disposées de part et d'autre des couteaux 5 de sorte que chaque extrémité latérale d'une portion de gaine 3 vienne en contact d'une rampe 7. En utilisant des couteaux 5 associés à deux rampes 7, les deux extrémités latérales de la portion de gaine 3 sont déplacées par les rampes 7 ce qui tend à étirer la gaine 3 et force la portion de gaine 3 à se déformer pour s'écarter de l'âme 2 et réduire le transfert de pollution vers l'âme 2.

Au moins deux déflecteurs 8 sont agencés en aval des au moins deux rampes 7 et qui possèdent une face externe s'éloignant de l'âme 2 lorsque l'on suit le sens de fourniture du câble 1. La face externe des déflecteurs 8 est avantageusement plus prononcée que la rampe 7 pour déplacer la gaine 3 dans la deuxième direction. Cependant, le poids des portions de gaine 3 peut être suffisant pour finir de déplacer la gaine 3 à une distance importante de l'âme 2.

Une fois que les rampes 7 ont commencé à déformer les portions de gaine 3, pour éviter que les portions de gaine 3 ne reviennent dans leur position initiale, il est avantageux de les décaler définitivement de l'âme 2 au moyen des déflecteurs 8. Les déflecteurs 8 accentuent le déplacement des portions de gaine 3 selon la deuxième direction ce qui permet d'écarter définitivement la portion de gaine 3 de l'âme 2.

Cette configuration est particulièrement avantageuse car elle permet d'avoir une séparation de l'âme 2 et de la gaine 3 de manière douce sans solliciter l'âme 2. Dans les configurations de l'art antérieur où les portions de gaine 3 ne sont pas mécaniquement dissociées de l'âme 2 lors de l'étape de coupure, il est nécessaire de tirer sur l'âme 2 et sur la gaine 3 pour effectuer la séparation. Cela impose d'avoir un moyen de préhension sur l'âme ou un amorçage manuel de l'opération de séparation. Le document FR 2728735 propose d'utiliser un moyen d'écartement tronconique qui s'insère entre l'âme et la gaine pour déchirer la gaine et la séparer de l'âme. Cette solution suppose que la gaine n'est pas abimée ou que la fragilisation réalisée par les faisceaux laser définit la zone de rupture. Cette configuration impose également que la gaine et l'âme poussent contre le séparateur tronconique avec une force suffisante pour réaliser la déchirure de la gaine alors que la gaine est chauffée et qu'elle a été fragilisée par les rainures formées par les faisceaux laser.

Les couteaux 5 réalisent la découpe complète de l'épaisseur de la gaine 3. La gaine 3 se déforme et se sépare légèrement de l'âme 2 au moins sous l'effet des couteaux 5 ce qui autorise une plus grande liberté dans le placement des rampes 7 pour écarter la gaine 3 loin de l'âme 2.

Dans une configuration avantageuse, les au moins deux couteaux 5 comprennent deux couteaux 5 ayant leur zone de découpe 5a dans un même plan. En d'autres termes, les deux faces de découpe 5a sont disposées selon un diamètre du câble 1. Les deux couteaux 5 sont séparés d'une première distance de séparation qui correspond avantageusement au diamètre de l'âme 2 ou au diamètre interne de la gaine 3 et les rampes 7 sont préférentiellement séparées de la première distance de séparation pour faciliter la prise de contact avec les portions de gaine 3.

Dans les modes de réalisation illustrés aux figures 2 et 3, chaque couteau 5 est prolongé par une surface plane parallèle à l'axe de fourniture de câble 1 et destinée à recevoir l'âme 2 pour former le bloqueur 6.

De manière préférentielle, les bloqueurs 6 s'étendent sur une distance égale à au moins un rayon de l'âme 2 pour assurer un bon maintien de l'âme et de préférence inférieure au diamètre interne de la gaine 3.

Comme indiqué plus haut, il est avantageux de prévoir que chaque couteau 5 possède un front de découpe 5a disposé radialement et perpendiculairement par rapport à la direction de fourniture du câble ou un front de découpe 5a s'éloignant de l'âme 2 du câble 1 selon le sens de fourniture du câble. Les couteaux 5 peuvent avoir une forme différente entre eux, mais il est avantageux de fournir sensiblement le même effort de découpe des couteaux 5 sur la gaine 3 pour ne pas changer l'orientation du câble 1.

Il est avantageux de prévoir une configuration particulière dans laquelle les deux couteaux 5 diamétralement opposés sont montés fixes sur deux supports 9. Le dispositif pour séparer une âme 2 et une gaine 3 d'un câble 1 comporte des moyens de réglage 10 des deux supports 9 configurés pour définir une première distance de séparation entre les deux couteaux 5. Il est alors possible d'adapter la position des couteaux 5 au diamètre du câble 1 et plus particulièrement au diamètre de l'âme 1 pour assurer une bonne séparation entre l'âme 2 et la gaine 3. Cette solution est nettement plus avantageuse que le séparateur tronconique de l'art antérieur. Les moyens de réglage 10 des deux supports 9 peuvent être formés par des vis bloquant les supports 9 dans la position choisie.

Lorsque le couteau 5, le bloqueur 6 et la ou les rampes 7 sont formés par un élément monobloc ou monolithique, il suffit d'ajuster la position du moyen de réglage 10 pour adapter simultanément, la découpe de la gaine 3, la déformation de la portion de gaine 3 et son déplacement.

Même si les moyens de réglage 10 sont particulièrement avantageux lorsque le dispositif comporte deux couteaux 5 diamétralement opposés et plus particulièrement uniquement deux couteaux 5 diamétralement opposés, il est également possible d'utiliser les moyens de réglage avec plus de couteaux 5.

Comme illustré sur les figures 2 et 3, il est avantageux de prévoir que les déflecteurs 8 soient montés en appui sur les couteaux 5 ou les supports 9 des couteaux 5 pour définir un trou traversant délimité par les déflecteurs 8 et les bloqueurs 6. Une fois que le câble 1 vient en contact des couteaux 5, l'âme 2 se déplace selon la direction de fourniture jusqu'à la sortie, les bloqueurs 6 évitent un déplacement non désiré de l'âme 2 ce qui guide l'âme 2 vers la sortie. Les déflecteurs 8 viennent limiter les déplacements dans l'autre direction. Cette configuration facilite le transit de l'âme 2 jusqu'à la sortie.

Il est également intéressant de prévoir que les déflecteurs 8 soient montés sur des moyens de réglage 10 qui permettent de s'adapter à la section de l'âme 2 et plus particulièrement à la déformation de la gaine 3.

Les couteaux 5 et les déflecteurs 8 peuvent être montés sur un anneau 11 destiné à être traversé en son centre par l'âme 2. Le centre de l'anneau 11 peut éventuellement former la sortie. Les déflecteurs 8 déplacent les portions de gaine 3 vers la partie externe de l'anneau 11 quand elles quittent les rampes 7.

Le découpage de la gaine 3 permet de séparer mécaniquement la gaine 3 et l'âme 2 en une seule opération sans contraindre l'âme 2. Lorsque l'opération de découpe est réalisée de manière à former uniquement deux portions de gaine 3, les deux portions de gaine 3 sont préférentiellement identiques pour éviter d'avoir à tirer sur la portion de gaine 3 représentant plus de 50% de la surface de l'âme 2 et donc d'augmenter le risque de déplacement d'une contamination externe vers l'âme 2.

Il est également avantageux de prévoir un front de découpe 5a de la partie supérieure de la gaine 3 qui se trouve dans le plan vertical médian ou sensiblement dans le plan vertical médian. Cette configuration évite qu'un retournement de la gaine 3, lors de la découpe, vienne placer la face externe découpée au-dessus du câble 1 et ne transfère sa pollution. Ainsi, lors de la découpe, la gravité entraine la portion de gaine 3 et sa pollution vers le bas. Une problématique similaire peut être trouvé lors de l'utilisation d'un séparateur tronconique qui ne peut pas imposer complètement la déformation de la gaine 3 avec le risque que la pollution se dépose sur la paroi externe du séparateur et glisse jusqu'à l'âme 2.

Le dispositif pour séparer l'âme 2 et la gaine 3 est avantageusement dépourvu de moyen de chauffage.

Par exemple, lorsque le câble 1 est souillé, il est avantageux d'utiliser une enceinte 12 qui va confiner les poussières et autres impuretés présentes sur la face externe de la gaine 3. L'appareil 4 configuré pour délivrer le câble 1, les au moins deux couteaux 5 et les déflecteurs 6 sont enfermés dans l'enceinte 12 pour traiter le câble contaminé. Le centre de l'anneau 11 forme avantageusement une sortie de l'âme 2 hors de l'enceinte 12.

L'appareil 4 configuré pour délivrer le câble 1 et notamment les galet 4a est en contact de la paroi externe qui est contaminée/polluée. L'appareil 4 est disposé en amont de la zone de découpe. Les couteaux 5 viennent découper la gaine 3 et peuvent être en contact avec paroi externe contaminée selon la configuration du front de coupe.

Les bloqueurs 6 ne sont en contact qu'avec l'âme 2 qui n'est pas contaminée. La rampe 7 est agencée pour venir en contact avec la face interne de la gaine 3 et ne doit pas être contaminée. La rampe 7 n'est pas en contact avec l'âme. La rampe 7 est configurée pour séparer la gaine 3 et l'âme 2.

L'inclinaison de la rampe 7 est configurée de manière à ce que seulement la paroi interne de la gaine 3 vienne en appui. Ainsi une éventuelle contamination de la gaine 3 ne se dépose pas contre la rampe 7.

La configuration présentée permet d'éviter tout contact non intentionnel entre l'âme 2 et la paroi externe de la gaine 3.

Afin de pouvoir travailler avec des câbles 1 ayant des performances mécaniques différentes, il est avantageux d'utiliser un centreur 13 monté entre l'appareil 4 configuré pour délivrer le câble 1 et les au moins deux couteaux 5. Le centreur 13 comporte au moins un guide monté mobile perpendiculairement par rapport à l'axe de fourniture de câble 1 pour décaler l'axe longitudinal du câble 1 par rapport aux au moins deux couteaux 5. De manière avantageuse, le centreur 13 est monté afin de compenser une éventuelle déformation du câble 1 due à la gravité entre la sortie des galets 4a et les couteaux 5. Il est également envisageable d'utiliser le centreur 13 pour déformer le câble 1, mais ce mode de réalisation est moins avantageux qu'avec les galets 4a car les efforts appliqués sur la gaine 3 sont importants et orientés selon l'axe longitudinal du câble 1. Cela peut entrainer une détérioration de la gaine 3.

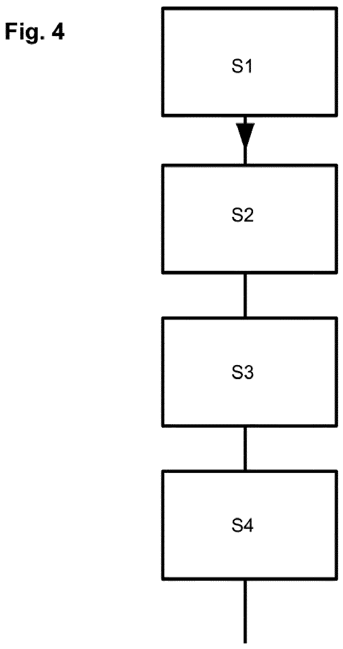

Pour séparer efficacement l'âme et la gaine d'un câble 1, il est proposé un procédé de séparation de l'âme et de la gaine d'un câble tel qu'illustré à la figure 4 et comprenant successivement :
- fournir un câble 1 muni d'une gaine 3 entourant une âme 2, le câble 3 circulant selon un axe de fourniture de câble et avec un sens de fourniture de câble dans une étape S1,
- découper la gaine 3 sur toute son épaisseur au moyen d'au moins deux couteaux 5 de manière à former au moins deux portions de gaine 3 mécaniquement dissociées l'une de l'autre, les deux couteaux 5 s'étendant radialement depuis l'axe de fourniture de câble dans une première direction dans une étape S2,
- faire glisser chaque portion de gaine 3 sur au moins une rampe s'étendant à partir des au moins deux couteaux 5, et maintenir l'âme 2 selon l'axe de fourniture de câble 1, la rampe 7 possédant une face externe s'éloignant de l'axe de fourniture du câble selon le sens de fourniture du câble pour séparer l'âme et la portion de gaine lors du défilement du câble selon la première direction, dans une étape S3,
- faire glisser chaque portion de gaine 3 sur un déflecteur pour déplacer les portions de gaine selon une deuxième direction perpendiculaire à la première direction et à l'axe de fourniture de câble, l'âme 2 passant d'un côté du déflecteur et la gaine 3 de l'autre côté du déflecteur dans une étape S4.

Une fois la gaine 3 sectionnée dans le sens de la longueur au moyen des couteaux 5 pour former au moins deux portions de gaine 3, les portions de gaine 3 sont maintenues à distance l'une de l'autre au moyen des bloqueurs 6 puis des rampes 7 qui augmentent la distance de séparation avec l'âme 2. La découpe de la gaine 3 pour former deux portions mécaniquement disjointes et dissociées de l'âme 2 facilement le déplacement des portions de gaine les unes par rapport aux autres et par rapport à l'âme 2. Le démarrage de la découpe et de la séparation peut être obtenu sans intervention extérieure et sans nécessité un effort important sur le câble 1 ou le chauffage préalable de ce dernier pour ramollir la gaine 3.

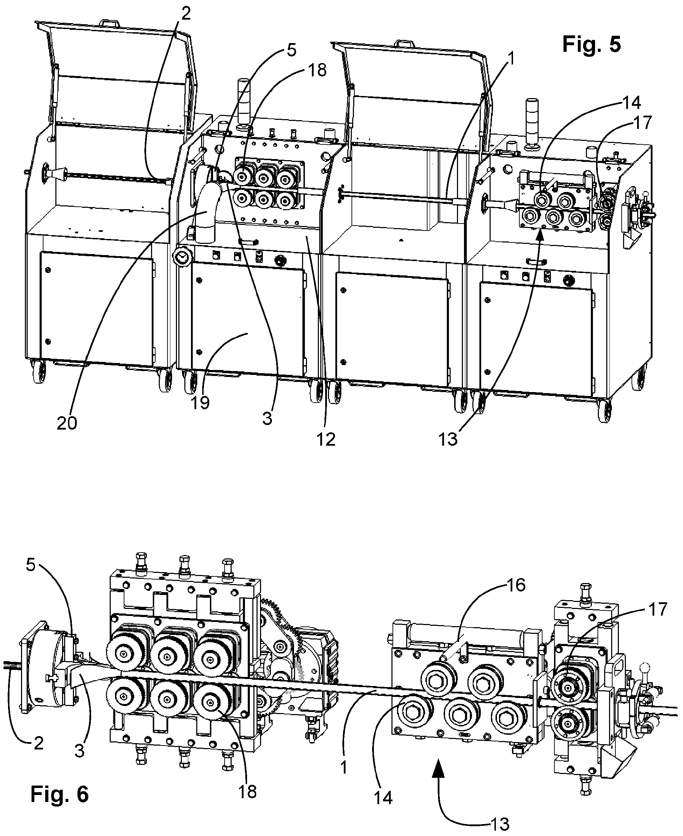

Dans un mode de réalisation avantageux illustré aux figures 5 et 6, le dispositif pour séparer l'âme 2 et la gaine 3 d'un câble 1 possède un équipement de déformation 13 du câble 1 qui est configuré pour déformer le câble 1 afin qu'il se présente de manière plus rectiligne face aux couteaux 5. L'équipement de déformation agit comme un équipement de redressage du câble. L'équipement de déformation 13 du câble 1 possède une première série de rouleaux 14, par exemple au moins trois rouleaux 14, qui sont disposés consécutivement le long du trajet du câble 1. Les trois rouleaux de la première série de rouleaux 14 se présentent sous la forme d'au moins deux premiers rouleaux disposés d'un premier côté du câble et au moins un deuxième rouleau disposé de l'autre côté du câble 1, dans le mode de réalisation cinq rouleaux répartis en trois premiers rouleaux et deux deuxièmes rouleaux. Le câble 1 circule alternativement d'un premier rouleau à un deuxième rouleau. De manière préférentielle, les rouleaux de la première série de rouleaux 14 possèdent des axes de rotation qui sont parallèles.

Lorsque le câble 1 circule depuis la zone d'entrée jusqu'au couteaux 5, le câble 1 est soumis à plusieurs efforts de déformation consécutifs orientés différemment, par exemple plusieurs efforts en flexion. Les efforts de déformation consécutifs dans différentes directions permettent de mieux définir la forme du câble 1 pour le présenter aux couteaux 5. Cette configuration est plus avantageuse qu'un dispositif de déformation qui ne possède qu'une seule paire de rouleaux montés en vis-à-vis perpendiculairement à l'axe longitudinal du câble.

Il est particulièrement avantageux de prévoir que le dispositif de déformation 13 comporte une première série de rouleaux 14 et une deuxième série de rouleaux (non représentée) qui sont orientés différemment, c'est-à-dire qui possèdent des axes de rotation non-parallèles, par exemple des axes de rotation perpendiculaires entre eux.

Dans un mode de réalisation non illustré, le dispositif de déformation 13 du câble comporte une première série de rouleaux 14 qui présentent une première orientation et une deuxième série de rouleaux qui présentent une deuxième orientation perpendiculaire à la première orientation. Cette configuration est particulièrement intéressante pour redresser le câble 1 avant d'atteindre les couteaux 5. Avantageusement, le dispositif comporte des moyens de réglage 15 de l'effort de compression de la première série de rouleaux 14 et/ou de la deuxième série de rouleaux. L'effort de compression peut être réglé en modifiant l'écartement entre les premiers rouleaux et les deuxièmes rouleaux pour chaque série. Les rouleaux du dispositif de déformation 13 sont préférentiellement des rouleaux lisses.

Dans un mode de réalisation préférentiel, le dispositif de déformation 13 du câble est disposé entre un premier dispositif d'entrainement 16 du câble et un deuxième dispositif d'entrainement 17 du câble. Les deux dispositifs d'entrainement du câble sont séparés par le dispositif de déformation 13 selon le cheminement du câble 1. Les rouleaux des dispositifs d'entrainement 16 et 17 sont préférentiellement des rouleaux texturés pour faciliter l'entrainement du câble 1. Le câble 1 est préférentiellement tendu entre les deux dispositifs d'entrainement 16 et 17. Il est avantageux que le deuxième dispositif d'entrainement 17 présente plusieurs paires de rouleaux pour redresser le câble en déformant le câble 1.

Afin de limiter la circulation d'un éventuel contaminant sur la surface de la gaine 3, il est avantageux de prévoir que le dispositif pour séparer la gaine 3 et l'âme 2 du câble 1 comporte un ou plusieurs réservoirs 18 destinés à recevoir les portions de gaine 3. Le ou les réservoirs 18 sont reliés à la zone de séparation par plusieurs tuyaux 19. De manière avantageuse, le ou les réservoirs 18 sont uniquement reliés à la zone de découpe par le ou les tuyaux 19 de sorte que la contamination présente à la surface de la gaine 3 reste très éloignée de l'âme 2.

De manière avantageuse, l'entrée du tuyau 19 se trouve dans le prolongement des faces latérales des couteaux 5 et le cas échéant d'un déflecteur 8 de sorte que la portion de gaine 3 qui vient d'être découpée se déplace naturellement le long de couteaux 5 puis des déflecteurs 8 vers l'entrée du tuyau. Une fois la portion de gaine 3 dans le tuyau, elle est poussée par les moyens d'entrainement vers le réservoir 18. De cette manière, le câble 1 peut être découpé et la gaine 3 installée dans le réservoir 19 sans intervention humaine. Après la découpe de la gaine 3, le déflecteur 8 déforme la portion de gaine 3 pour la diriger vers l'entrée du tuyau 19 ce qui limite les possibilités de déplacement de la portion de gaine 3 qui doit suivre le tuyau 19 jusqu'au réservoir 18.

Pour limiter le transfert de la contamination, il est avantageux que le réservoir 18 soit disposé plus bas que la zone de découpe. Une fois la portion de gaine 3 installée dans le tuyau 19, la gravité attire la portion de gaine 3 vers le réservoir 18. Il est avantageux d'avoir deux tuyaux 19 séparés par l'âme 2 de manière à récupérer deux portions de gaine 3.

Ce mode de réalisation permet de séparer l'âme 2 et la gaine 3 du câble 1 sans craindre que les portions de gaine 3 ne restent coincées dans la zone de découpe, se replient sur elles-mêmes et finissent par venir en contact de l'âme 2 après la séparation. Dans le mode de réalisation particulier illustré à la figure 5, le réservoir 18 est disposé sous la zone de découpe et/ou sous la zone de séparation.

## Revendications

1. Dispositif pour séparer une âme (2) et une gaine (3) d'un câble (1), comportant :
- un appareil (4) configuré pour fournir le câble (1) selon un axe de fourniture parallèle à l'axe longitudinal du câble (1) jusqu'à une sortie en passant entre au moins deux couteaux (5),
- les au moins deux couteaux (5) étant configurés pour découper la gaine (3) sur toute son épaisseur et former au moins deux portions de gaine (3) mécaniquement dissociées l'une de l'autre,
- au moins deux rampes (7) configurées pour maintenir la séparation entre les au moins deux portions de gaine (3) et séparer mécaniquement la gaine (3) et l'âme (2) jusqu'à la sortie en modifiant différemment la trajectoire de déplacement des au moins deux portions de gaine (3) par rapport à l'axe de fourniture, et **caractérisé en ce que** chaque couteau (5) comprend un front de découpe (5a) s'étendant selon une première direction radiale par rapport à l'axe longitudinal du câble (1) pour découper la gaine (3), **en ce que** les au moins deux rampes (7) sont connectées aux au moins deux couteaux (5) et s'étendent depuis les au moins deux couteaux (5), et **en ce qu'**au moins deux déflecteurs (8) sont agencés en aval des au moins deux rampes (7) pour recevoir les portions de gaine (3), les au moins deux déflecteurs (8) possédant une face externe modifiant la direction de déplacement des portions de gaine (3) perpendiculairement à l'axe longitudinal de l'âme (2).

2. Dispositif pour séparer une âme (2) et une gaine (3) d'un câble (1) selon la revendication précédente, dans lequel les au moins deux couteaux (5) comprennent deux couteaux (5) ayant leur front de découpe (5a) dans un même plan, lesdits deux couteaux (5) étant séparés d'une première distance de séparation et les rampes (7) possèdent une face de contact destinée à recevoir la portion de gaine (3) en sortie des couteaux (5), la face de contact étant orientée pour s'éloigner de l'axe longitudinal de l'âme (2) lors d'un déplacement de la gaine (3) de l'amont vers l'aval.

3. Dispositif pour séparer une âme (2) et une gaine (3) d'un câble (1) selon l'une des revendications 1 et 2, dans lequel chaque front de découpe (5a) possède une première extrémité qui s'étend selon l'axe de fourniture de manière adjacente à la rampe (7) associée éventuellement jusqu'au déflecteur (8).

4. Dispositif pour séparer une âme (2) et une gaine (3) d'un câble (1) selon l'une des revendications 1 à 3, dans lequel chaque couteau (5) possède un front de découpe (5a) disposé radialement et perpendiculairement par rapport à l'axe longitudinal du câble (1) ou un front de découpe disposé radialement et s'éloignant de l'axe longitudinal de l'âme (2) lors d'un déplacement de la gaine (3) de l'amont vers l'aval.

5. Dispositif pour séparer une âme (2) et une gaine (3) d'un câble (1) selon l'une des revendications 2 à 4, dans lequel lesdits deux couteaux (5) sont montés fixes sur deux supports (9), en association avec des moyens de réglage (10) des deux supports (9) configurés pour définir une valeur de première distance de séparation entre les deux couteaux (5).

6. Dispositif pour séparer une âme (2) et une gaine (3) d'un câble (1) selon l'une des revendications précédentes, dans lequel les rampes (7) sont montées fixes sur les couteaux (5) associés.

7. Dispositif pour séparer une âme (2) et une gaine (3) d'un câble (1) selon l'une des revendications 2 à 6, ne comportant que deux couteaux (5) agencés pour former deux portions de gaine (3) identiques.

8. Dispositif pour séparer une âme (2) et une gaine (3) d'un câble (1) selon l'une des revendications 2 à 7, dans lequel les zones de découpe (5a) des deux couteaux (5) appartiennent à un plan vertical.

9. Dispositif pour séparer une âme (2) et une gaine (3) d'un câble (1) selon l'une des revendications précédentes, dans lequel les déflecteurs (8) sont montés en appui sur les couteaux (5) pour définir un trou traversant délimité par les déflecteurs (8) et les rampes (7).

10. Dispositif pour séparer une âme (2) et une gaine (3) d'un câble (1) selon l'une des revendications précédentes, dans lequel les couteaux (5) et les déflecteurs (8) sont montés sur un anneau (9) destiné à être traversé en son centre par l'âme (2), les déflecteurs (8) déplaçant les portions de gaine (3) vers la partie externe de l'anneau (9).

11. Dispositif pour séparer une âme (2) et une gaine (3) d'un câble (1) selon l'une des revendications précédentes, comportant un centreur (13) monté entre l'appareil (4) configuré pour délivrer le câble (1) et les au moins deux couteaux (5), le centreur (13) comportant au moins un guide monté mobile perpendiculairement par rapport à l'axe de fourniture de câble (1) pour décaler l'axe longitudinal du câble par rapport aux au moins deux couteaux (5).

12. Dispositif pour séparer une âme (2) et une gaine (3) d'un câble (1) selon l'une des revendications précédentes, dans lequel l'appareil (4) configuré pour fournir le câble (1) applique une pression sur le câble (1) au moyen de deux galets (4a) rotatifs, la pression étant configurée pour déformer la gaine (3) et uniformiser la forme de la gaine (3).

13. Dispositif pour séparer une âme (2) et une gaine (3) d'un câble (1) selon la revendication précédente, dans lequel l'appareil (4) possède deux galets (4a) rotatifs possédant une gorge en forme de V et dans lequel l'appareil (4) applique une pression configurée pour déformer la gaine (3) et fournir deux premières zones de gaine (3) diamétralement opposées ayant une épaisseur supérieure à deux deuxièmes zones de gaine (3) diamétralement opposées, les deux premières zones de gaine (3) étant décalées de 90° par rapport aux deux deuxièmes zones de gaine (3), les deux couteaux (5) étant agencés pour découper la gaine (3) dans les deux premières zones de gaine (3).

14. Procédé de séparation de l'âme (2) et de la gaine (3) d'un câble (1) comprenant successivement :
- fournir un câble (1) muni d'une gaine (3) entourant une âme (2), le câble (1) circulant selon un axe de fourniture parallèle à un axe longitudinal du câble (1) et avec un sens de fourniture,
- découper la gaine (3) sur toute son épaisseur au moyen d'au moins deux couteaux (5) pour former au moins deux portions de gaine (3) mécaniquement dissociées l'une de l'autre, les deux couteaux (5) s'étendant selon une première direction radiale par rapport à l'axe longitudinal du câble (1),
- faire glisser chaque portion de gaine (3) sur au moins une rampe (7) connectée à un couteau (5), les au moins deux rampes (7) s'étendant à partir des au moins deux couteaux (5) pour maintenir séparer les portions de gaine (3) et désolidariser l'âme (2) et la gaine (3), et maintenir l'âme (2) selon l'axe de fourniture de câble, la rampe (7) possédant une face externe s'éloignant de l'axe de fourniture du câble selon le sens de fourniture du câble pour séparer l'âme (2) et la portion de gaine (3) lors du défilement du câble (1) selon l'axe de fourniture,
- faire glisser chaque portion de gaine (3) sur un déflecteur (8) pour déplacer les portions de gaine (3) selon une deuxième direction perpendiculaire à la première direction et à l'axe de fourniture de câble, l'âme (2) passant d'un côté du déflecteur (8) et la gaine (3) de l'autre côté du déflecteur (8).

## Patentansprüche

1. Vorrichtung zum Trennen einer Seele (2) und eines Mantels (3) eines Kabels (1), umfassend:
- eine Vorrichtung (4), die dazu konfiguriert ist, das Kabel (1) entlang einer Zuführachse, die parallel zur Längsachse des Kabels (1) ist, zwischen mindestens zwei Messern (5) hindurch bis zu einem Auslass zu befördern,
- wobei die mindestens zwei Messer (5) dazu konfiguriert sind, den Mantel (3) auf seiner gesamten Dicke zu schneiden und mindestens zwei mechanisch voneinander getrennte Mantel (3)-Abschnitte zu bilden,
- mindestens zwei Rampen (7), die dazu konfiguriert sind, die Trennung zwischen den mindestens zwei Mantel (3)-Abschnitten aufrechtzuerhalten und den Mantel (3) und die Seele (2) bis zum Auslass mechanisch zu trennen, indem sie die Bewegungsbahn der mindestens zwei Mantel (3)-Abschnitte relativ zur Zuführachse unterschiedlich verändern, und
**dadurch gekennzeichnet, dass** jedes Messer (5) eine Schneidkante (5a) aufweist, die sich in einer ersten Radialrichtung relativ zur Längsachse des Kabels (1) erstreckt, um den Mantel (3) zu schneiden,
dass die mindestens zwei Rampen (7) mit den mindestens zwei Messern (5) verbunden sind und sich von den mindestens zwei Messern (5) aus erstrecken, und
dass den mindestens zwei Rampen (7) mindestens zwei Ablenkplatten (8) nachgelagert sind, um die Mantel (3)-Abschnitte aufzunehmen, wobei die mindestens zwei Ablenkplatten (8) eine Außenfläche aufweisen, die die Bewegungsrichtung der Mantel (3)-Abschnitte senkrecht zur Längsachse der Seele (2) verändert.

2. Vorrichtung zum Trennen einer Seele (2) und eines Mantels (3) eines Kabels (1) nach dem vorherigen Anspruch, wobei die mindestens zwei Messer (5) zwei Messer (5) umfassen, deren Schneidkante (5a) in einer selben Ebene liegt, wobei die zwei Messer (5) durch einen ersten Trennungsabstand voneinander getrennt sind und die Rampen (7) eine Kontaktfläche aufweisen, die dazu bestimmt ist, den aus den Messern (5) austretenden Mantel (3)-Abschnitt aufzunehmen, wobei die Kontaktfläche ausgerichtet ist, um sich bei einer Vorschubbewegung des Mantels (3) von der Längsachse der Seele (2) zu entfernen.

3. Vorrichtung zum Trennen einer Seele (2) und eines Mantels (3) eines Kabels (1) nach einem der Ansprüche 1 und 2, wobei jede Schneidkante (5a) ein erstes Ende aufweist, das sich benachbart zur gegebenenfalls zugehörigen Rampe (7) bis zur Ablenkplatte (8) entlang der Zuführachse erstreckt.

4. Vorrichtung zum Trennen einer Seele (2) und eines Mantels (3) eines Kabels (1) nach einem der Ansprüche 1 bis 3, wobei jedes Messer (5) eine Schneidkante (5a) aufweist, die radial und senkrecht zur Längsachse des Kabels (1) angeordnet ist, oder eine Schneidkante, die radial angeordnet ist und sich bei einer Vorschubbewegung des Mantels (3) von der Längsachse der Seele (2) entfernt.

5. Vorrichtung zum Trennen einer Seele (2) und eines Mantels (3) eines Kabels (1) nach einem der Ansprüche 2 bis 4, wobei die zwei Messer (5) fest an zwei Halterungen (9) angebracht sind, in Verbindung mit Einstellvorrichtungen (10) für die zwei Halterungen (9), die dazu konfiguriert sind, einen ersten Trennungsabstand zwischen den zwei Messern (5) zu definieren.

6. Vorrichtung zum Trennen einer Seele (2) und eines Mantels (3) eines Kabels (1) nach einem der vorherigen Ansprüche, wobei die Rampen (7) fest an den zugehörigen Messern (5) angebracht sind.

7. Vorrichtung zum Trennen einer Seele (2) und eines Mantels (3) eines Kabels (1) nach einem der Ansprüche 2 bis 6, umfassend nur zwei Messer (5), die angeordnet sind, um zwei identische Mantel (3)-Abschnitte zu bilden.

8. Vorrichtung zum Trennen einer Seele (2) und eines Mantels (3) eines Kabels (1) nach einem der Ansprüche 2 bis 7, wobei die Schneidkanten (5a) der zwei Messer (5) in einer vertikalen Ebene liegen.

9. Vorrichtung zum Trennen einer Seele (2) und eines Mantels (3) eines Kabels (1) nach einem der vorherigen Ansprüche, wobei die Ablenkplatten (8) auf den Messern (5) aufliegend montiert sind, um ein Durchgangsloch zu definieren, das durch die Ablenkplatten (8) und die Rampen (7) begrenzt wird.

10. Vorrichtung zum Trennen einer Seele (2) und eines Mantels (3) eines Kabels (1) nach einem der vorherigen Ansprüche, wobei die Messer (5) und die Ablenkplatten (8) auf einem Ring (9) montiert sind, der dazu bestimmt ist, in seinem Zentrum von der Seele (2) durchlaufen zu werden, wobei die Ablenkplatten (8) die Mantel (3)-Abschnitte zum äußeren Teil des Rings (9) hin verschieben.

11. Vorrichtung zum Trennen einer Seele (2) und eines Mantels (3) eines Kabels (1) nach einem der vorherigen Ansprüche, umfassend eine Zentriervorrichtung (13), die zwischen dem zur Zuführung des Kabels (1) konfigurierten Vorrichtung (4) und den mindestens zwei Messern (5) montiert ist, wobei die Zentriervorrichtung (13) mindestens eine Führung aufweist, die senkrecht zur Zuführachse des Kabels (1) beweglich montiert ist, um die Längsachse des Kabels relativ zu den mindestens zwei Messern (5) zu versetzen.

12. Vorrichtung zum Trennen einer Seele (2) und eines Mantels (3) eines Kabels (1) nach einem der vorherigen Ansprüche, wobei die zur Zuführung des Kabels (1) konfigurierte Vorrichtung (4) durch zwei drehbare Rollen (4a) einen Druck auf das Kabel (1) ausübt, wobei der Druck dazu konfiguriert ist, den Mantel (3) zu verformen und die Form des Mantels (3) zu vereinheitlichen.

13. Vorrichtung zum Trennen einer Seele (2) und eines Mantels (3) eines Kabels (1) nach dem vorherigen Anspruch, wobei die Vorrichtung (4) zwei drehbare Rollen (4a) mit einer V-förmigen Nut aufweist, und wobei die Vorrichtung (4) einen Druck ausübt, der dazu konfiguriert ist, den Mantel (3) zu verformen und zwei diametral entgegengesetzte erste Mantel (3)-Bereiche herzustellen, deren Dicke größer ist als die von zwei diametral entgegengesetzten zweiten Mantel (3)-Bereichen, wobei die zwei ersten Mantel (3)-Bereiche den zwei zweiten Mantel (3)-Bereichen gegenüber um 90° versetzt sind, wobei die zwei Messer (5) angeordnet sind, um den Mantel (3) in die zwei ersten Mantel (3)-Bereiche zu zerschneiden.

14. Verfahren zum Trennen der Seele (2) und des Mantels (3) eines Kabels (1), umfassend die folgenden aufeinanderfolgenden Schritte:
- Bereitstellen eines Kabels (1), das mit einem Mantel (3) versehen ist, der eine Seele (2) umgibt, wobei das Kabel (1) entlang einer Zuführachse, die parallel zur Längsachse des Kabels (1) ist, und mit einer Zuführrichtung vorgeschoben wird,
- Schneiden des Mantels (3) auf seiner gesamten Dicke durch mindestens zwei Messer (5), um mindestens zwei mechanisch voneinander getrennte Mantel (3)-Abschnitte zu bilden, wobei die zwei Messer (5) sich in einer ersten Radialrichtung relativ zur Längsachse des Kabels (1) erstrecken,
- Gleitenlassen jedes Mantel (3)-Abschnitts auf mindestens einer Rampe (7), die mit einem Messer (5) verbunden ist, wobei die mindestens zwei Rampen (7) sich von den mindestens zwei Messern (5) aus erstrecken, um die Mantel (3)-Abschnitte voneinander getrennt zu halten, die Seele (2) und den Mantel (3) voneinander zu trennen und die Seele(2) entlang der Kabelzuführachse zu halten, wobei die Rampe (7) eine Außenfläche aufweist, die sich in der Zuführrichtung von der Zuführachse des Kabels entfernt, um die Seele (2) und den Mantel (3)-Abschnitt beim Vorschub des Kabels (1) entlang der Zuführrichtung zu trennen.
- Gleitenlassen jedes Mantel (3)-Abschnitts auf einer Ablenkplatte (8), um die Mantel (3)-Abschnitte in eine zweite Richtung senkrecht zur ersten Richtung und zur Kabelzuführachse zu bewegen, wobei die Seele (2) auf der einen Seite der Ablenkplatte (8) und der Mantel (3) auf der anderen Seite der Ablenkplatte (8) durchläuft.

## Claims

1. Device for separating a core (2) and a sheath (3) of a cable (1), comprising:
- an apparatus (4) configured to feed the cable (1) along a feed axis parallel to the longitudinal axis of the cable (1) up to an outlet passing between at least two knives (5),
- the at least two knives (5) being configured to cut the sheath (3) over its whole thickness and to form at least two portions of the sheath (3) mechanically dissociated from one another,
- at least two ramps (7) configured to maintain the separation between the at least two portions of the sheath (3) and to mechanically separate the sheath (3) and the core (2) up to the outlet by modifying the movement path of at least two portions of the sheath (3) differently with respect to the feed axis, and
**characterized in that** each knife (5) comprises a cutting front (5a) extending along a first radial direction with respect to the longitudinal axis of the cable (1) to cut the sheath (3),
**in that** the at least two ramps (7) are connected to the at least two knives (5) and extending from the at least two knives (5), and
**in that** at least two deflectors (8) are arranged down-line from at least two ramps (7) to receive the portions of the sheath (3), at least two deflectors (8) having an outer surface modifying the direction of movement of the portions of the sheath (3) perpendicularly to the longitudinal axis of the core (2).

2. Device for separating a core (2) and a sheath (3) of a cable (1) according to the foregoing claim, wherein at least two knives (5) comprise two knives (5) having their cutting front (5a) in a same plane, said two knives (5) being separated by a first separating distance, and the ramps (7) have a contact surface designed to receive the portion of the sheath (3) on outlet from the knives (5), the contact surface being oriented so as to move away from the longitudinal axis of the core (2) when movement of the sheath (3) takes place from up-line to down-line.

3. Device for separating a core (2) and a sheath (3) of a cable (1) according to one of claims 1 and 2, wherein each cutting front (5a) has a first end extending along the feed axis in adjacent manner to the ramp (7) and possibly associated therewith up to the deflector (8).

4. Device for separating a core (2) and a sheath (3) of a cable (1) according to one of claims 1 to 3, wherein each knife (5) has a cutting front (5a) arranged radially and perpendicularly with respect to the longitudinal axis of the cable (1) or a cutting front arranged radially and extending away from the longitudinal axis of the core (2) when movement of the sheath (3) takes place from up-line to down-line.

5. Device for separating a core (2) and a sheath (3) of a cable (1) according to one of claims 2 to 4, wherein said two knives (5) are mounted fixed on two supports (9) in association with adjustment means (10) of the two supports (9) configured to define a value of first separating distance between the two knives (5).

6. Device for separating a core (2) and a sheath (3) of a cable (1) according to one of the foregoing claims, wherein the ramps (7) are mounted fixed on the associated knives (5).

7. Device for separating a core (2) and a sheath (3) of a cable (1) according to one of claims 2 to 6, comprising only two knives (5) arranged to form two identical portions of the sheath (3).

8. Device for separating a core (2) and a sheath (3) of a cable (1) according to one of claims 2 to 7, wherein the cutting zones (5a) of the two knives (5) belong to a vertical plane.

9. Device for separating a core (2) and a sheath (3) of a cable (1) according to one of the foregoing claims, wherein the deflectors (8) are mounted pressing on the knives (5) to define a through hole delineated by the deflectors (8) and the ramps (7).

10. Device for separating a core (2) and a sheath (3) of a cable (1) according to one of the foregoing claims, wherein the knives (5) and the deflectors (8) are mounted on a ring (9) designed so that the core (2) passes through the centre of the latter, the deflectors (8) moving the portions of the sheath (3) towards the outer part of the ring (9).

11. Device for separating a core (2) and a sheath (3) of a cable (1) according to one of the foregoing claims, comprising a centring device (13) fitted between apparatus (4) configured to deliver the cable (1) and at least two knives (5), the centring device (13) comprising at least one guide mounted perpendicularly movable with respect to the cable (1) feed axis to shift the longitudinal axis of the cable with respect to at least two knives (5).

12. Device for separating a core (2) and a sheath (3) of a cable (1) according to one of the foregoing claims, wherein apparatus (4) configured to feed the cable (1) applies a pressure on the cable (1) by means of two rotary rollers (4a), the pressure being configured to deform the sheath (3) and make the shape of the sheath (3) uniform.

13. Device for separating a core (2) and a sheath (3) of a cable (1) according to the foregoing claim, wherein apparatus (4) has two rotary rollers (4a) having a V-shaped groove and wherein apparatus (4) applies a pressure configured to deform the sheath (3) and to provide two diametrically opposite first sheath zones (3) having a larger thickness than two diametrically opposite second sheath zones (3), the two first sheath zones (3) having an offset of 90° with respect to the two second sheath zones (3), the two knives (5) being arranged to cut the sheath (3) in the two first sheath zones (3).

14. Method for separating the core (2) and the sheath (3) of a cable (1) successively comprising:
- providing a cable (1) provided with a sheath (3) surrounding a core (2), the cable (1) running along a feed axis parallel to a longitudinal axis of the cable (1) and with a feed direction,
- cutting the sheath (3) over its whole thickness by means of at least two knives (5) to form at least two portions of the sheath (3) mechanically dissociated from one another, the two knives (5) extending in a first radial direction with respect to the longitudinal axis of the cable (1),
- making each portion of the sheath (3) slide on at least one ramp (7) connected to a knife (5), the at least two ramps (7) extending from the at least two knives (5) to keep the portions of the sheath (3) separated from one another and to strip the sheath (3) from the core (2), and to secure the core (2) along the cable feed axis, the ramp (7) having an outer surface extending away from the cable feed axis in the feed direction of the cable to separate the core (2) and the portion of the sheath (3) when the cable (1) runs along the feed axis,
- making each portion of the sheath (3) slide on a deflector (8) to move the portions of the sheath (3) in a second direction perpendicular to the first direction and to the cable feed axis, the core (2) passing on one side of the deflector (8) and the sheath (3) on the other side of the deflector (8).
